# EUROPEAN PATENT SPECIFICATION

(11) **EP 0 786 821 B1**
(45) Date of publication and mention of the grant of the patent: **02.01.2003**
(21) Application number: 97300362.7
(22) Date of filing: 21.01.1997
(51) Int. Cl.: H01M 2/10, H01M 6/50, H01M 10/48

(54) **Battery discriminating method, dry battery cell pack, and electronic device**
Batteriediskriminierungsverfahren, Trockenzellenbatteriepack und elektronische Vorrichtung
Méthode de discrimination de batterie, paquet de batteries de piles sèches et dispositif électronique

(30) Priority: 29.01.1996 JP 3552296; 08.03.1996 JP 8075696
(43) Date of publication of application: 30.07.1997
(60) Divisional application: 01203591.1
(73) Proprietor: SONY CORPORATION, Tokyo 141 (JP)
(72) Inventor: Higuchi, Yoshinari, c/o Sony Corporation, Shinagawa-ku, Tokyo 141 (JP)
(74) Representative: Pratt, Richard Wilson

(56) References cited:
- EP-A- 0 394 074
- GB-A- 2 239 567
- GB-A- 2 251 515
- US-A- 4 680 527
- US-A- 5 293 109

## Description

This invention relates to a battery pack, and an electronic device.

It is known to use high-capacity battery packs containing cells such as a plurality of lithium-ion cells to supply direct current to an electronic device such as a portable personal computer, video camera, or portable telephone.

Such battery packs contain rechargeable cells, thus they are very expensive. However, as electronic devices become smaller in size and achieve a larger saving in power consumption, inexpensive dry batteries (i.e. non-rechargeable batteries) come to be used in them. Battery packs become unusable if the batteries become discharged. Accordingly, the necessity to carry a plurality of charged battery packs occurs. However, the need to buy a plurality of rechargeable battery packs is an economic burden on the user because such battery packs are expensive. It is very convenient for the user if electronic devices can be used with dry batteries because the user can easily buy dry batteries.

Rechargeable battery packs and dry battery packs useable in the same electronic devices naturally have the same structure of electrodes. However, it is desirable to discriminate between dry battery packs and rechargeable battery packs. Such discrimination is known for the purpose of adjusting the operating parameters of the electronic device using the battery pack in accordance with the type of pack as disclosed in EP-A-0,394,074 for example. It is also known from EP-A-0,394,074 to perform such discrimination in a battery charger to prevent the charging of a dry battery pack if a dry battery pack is fitted in a charger.

In one prior proposal, to discriminate rechargeable battery packs from dry battery packs, a concave part is provided on one side of a rechargeable battery pack for an electronic device but a concave part is not provided on one side of a dry battery pack for the electronic device. A push switch is provided on the electronic device to detect whether a concave part is present in the battery pack. When the rechargeable battery pack having the concave part is fitted to the electronic device, the push switch is not actuated . A microcomputer in the electronic device detects this state and determines that a rechargeable battery pack is fitted thereto. On the other hand, when a dry battery cell pack is fitted to the electronic device, the push switch is actuated. the microcomputer in the electronic device detects this state and determines that a dry battery cell pack is fitted thereto.

If the external shape of battery packs is used to discriminate between rechargeable battery packs and dry battery cell packs, a push switch as described above is needed on the battery fitting part of an electronic device. However, that may undesirable limit the design of the device. Also, where a reduction of the size of electronic devices is realised, if a plurality of push switches are used to discriminate between plural types of batteries, the spacing of the switches become narrow, so that errors in discrimination may occur.

GB-A-2,251,515, GB-A-2,239,567 and EP-A-394,074 all disclose battery packs in which code resistors included in the packs are used to identify the types of the packs. The electronic device powered by the pack applies a current to the code resistor of the pack to sense the value of the code resistor and hence the type of pack.

Recently, since microcomputers have become cheap, smart rechargeable battery packs have been produced in which a microcomputer is built into the battery pack. The microcomputer can communicate with the electronic device powered by the pack. By using such a smart battery pack, the remaining charge capacity of the battery pack can be calculated, and further, the number of times the pack is recharged is monitored to detect the life of the battery pack. The pack transmits the life to the electronic device. The electronic device displays the life on a display unit such as a liquid crystal panel.

The use of dry battery cell packs in electronic devices which can also use smart rechargeable battery packs has been also considered. However, if a microcomputer is built in to a dry battery cell pack, the pack becomes more expensive; as a result, one of the most important advantages of dry cell packs, the low cost thereof, is reduced.

One aspect of the present invention provides a pack for a plurality of non-rechargeable cells, the pack comprising:
a case for containing the plurality of cells ;
a positive terminal and a negative terminal for connection to corresponding positive and negative terminals of equipment to be energised by the pack, cells being arrangeable in series between the positive and negative terminals;
a further terminal for connection to a corresponding further terminal of the said equipment ; and
a resistance element connecting the further terminal to a connection point electrically intermediate the positive and negative terminals to apply to the further terminal an open circuit voltage less than the positive voltage applied by the series arranged cells to the positive terminal and greater than the negative voltage applied by the series arranged cells to the negative terminal, thereby identifying the type of pack.

An embodiment of the pack further comprises a plurality of cells arranged in series between the said positive and negative terminals.

In an embodiment of the pack which is interchangeable with a smart battery pack, only one low-impedance resistance element is used to identify the pack at low cost.

A further aspect of the present invention provides a combination of
A) an electronic device energisable by:
   a) one type of battery pack having positive and negative terminals between which a plurality of cells are connected in series, and a further terminal, in which battery pack an open-circuit voltage intermediate the positive and negative voltages of the positive and negative terminals is present at the further terminal, and alternatively
   b) another type of battery pack having positive and negative terminals between which a plurality of cells are connected in series and a further terminal which is a data communication terminal, the electronic device comprising:
      positive, negative and further terminals corresponding to, and for connection to, those of the battery pack; and
      means for detecting whether the open-circuit voltage is present at the further terminal of the device, and
      responsive to the detection of whether or not the open-circuit voltage is present at the further terminal of the device for discriminating between the one and another types of battery pack; and
B) a battery pack according to said one aspect of the invention, which pack comprises a plurality of cells arranged in series between the said positive and negative terminals, and in which the positive, negative and further terminals are connected to corresponding terminals of the electronic device.

A better understanding of the invention will become more apparent from the following illustrative description when read in conjunction with the accompanying drawings in which like parts are designated by like reference numerals or characters and in which:
Fig. 1 is an external view showing a general structure according to an embodiment;
Fig. 2 is an external view showing the outline of a smart battery pack and a dry battery cell pack;
Fig. 3 is a block diagram showing the internal structure of the smart battery pack and an electronic device;
Fig. 4 is a block diagram showing the internal structure of the dry battery cell pack and the electronic device;
Fig. 5 is a block diagram showing the internal structure of another battery pack and the electronic device; and
Fig. 6 is a flowchart showing the process of a power-source discriminating method according to an embodiment.

Illustrative embodiments of this invention will be described with reference to the accompanying drawings.

Note that, the following embodiment will be described in the case of using a video camera as an electronic device. However, the present invention is not limited to such.

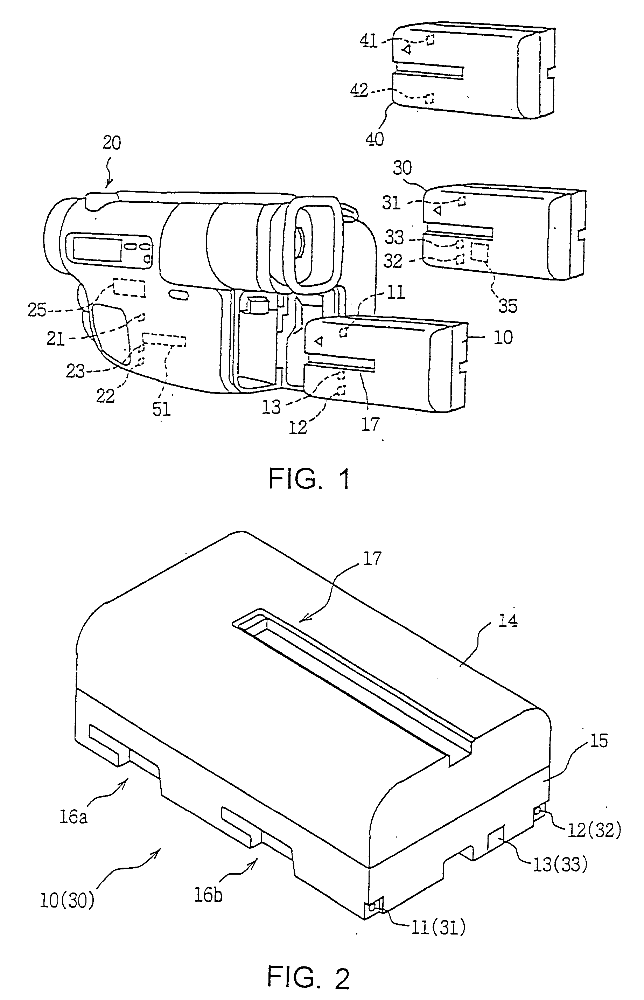

In Fig. 1, reference numeral 10 denotes a dry battery cell pack in which a plurality of dry battery cells are stored, reference numeral 20 denotes a video camera in which a battery pack is to be inserted into the case from the outside, reference numeral 30 denotes a smart battery pack in which a plurality of charge-battery cells and a microcomputer are contained, and reference numeral 40 denotes a conventional battery pack.

In the dry battery cell pack 10, a plus electrode 11 and a minus electrode 12 are provided, so that when the dry battery cell pack 10 is fitted to the video camera 20, the electrodes 11, 12 of the dry battery cell pack 10 are connected to electrodes 21, 22 which are provided in a battery fitting part of the video camera 20. In this way, the dry battery cell pack 10 can supply a direct current to the video camera 20 sequentially through the electrodes 11, 12 and the electrodes 21, 22.

In addition, in the dry battery cell pack 10, a battery discriminating terminal 13 is provided, so that when the dry battery cell pack 10 is fitted to the video camera 20, the terminal 13 is connected to a terminal 23 of the battery fitting part. This terminal 23 is provided for battery pack discrimination.

In the smart battery pack 30, a plus electrode 31 and a minus electrode 32 are provided, so that when the smart battery pack 30 is fitted to the video camera 20, the electrodes 31, 32 of the smart battery pack 30 are connected to the electrodes 21, 22 provided in the battery fitting part. In this way, the smart battery pack 30 can supply a direct current to the video camera 20 sequentially through the electrodes 31, 32 and the electrodes 21, 22.

In addition, in the smart battery pack 30, a battery discriminating terminal 33 is provided, so that when the smart battery pack 30 is fitted to the video camera 20, the terminal 33 is connected to the terminal 23 of the battery fitting part. This terminal 33 is connected to a microcomputer 35 contained in the smart battery pack 30 for communication to a microcomputer 25 contained in the video camera 20.

In the battery pack 40, a plus electrode 41 and a minus electrode 42 are provided, so that when the battery pack 40 is fitted to the video camera 20, the electrodes 41, 42 of the battery pack 40 are connected to the electrodes 21, 22 provided in the battery fitting part of the video camera 20. In this way, the battery pack 40 can supply a direct current to the video camera 20 sequentially through the electrodes 41, 42 and the electrodes 21, 22.

This battery pack 40 is one which has been used in conventional video cameras, and which has no terminal like the terminal 13 of the dry battery cell pack 10 and the terminal 33 of the smart battery pack 30.

In the battery fitting part of the video camera 20, the electrodes 21, 22 are provided so that a direct current can be supplied from any of the dry battery cell pack 10, the smart battery pack 30, and the battery pack 40. The terminal 23 provided in the battery fitting part is used as a discriminating terminal for discriminating whether the dry battery cell pack 10 or the smart battery pack 30 has been fitted, and also as a communication terminal between the microcomputer 35 contained in the smart battery pack 30 and the microcomputer 25 contained in the video camera 20. Note that, Fig. 1 shows an example in which the dry battery cell pack 10, the smart battery pack 30, and the battery pack 40 are fitted by way of insertion into the case of the video camera 20, but a different type of attachment to the video camera 20 may be utilised.

Fig. 2 is a perspective view showing the outside view of the dry battery cell pack 10 and the smart battery pack 30. Here, it is assumed that the external structure of the cases of the dry battery cell pack 10 and the smart battery pack 30 (hereinafter referred to as the battery pack 10 (30) are the same. The battery pack 10 (30) is composed of an upper case part 14 and a lower case part 15. On the upper case part 14, a reverse-insertion preventing groove 17 is provided. As shown in Fig. 1, in the video cameras 20 in which the battery pack 10 (30) is fitted by way of insertion, a reverse-insertion preventing rib 51 which corresponds to the reverse-insertion preventing groove 17 of the battery pack 10 (30) is provided. This combination of the reverse-insertion preventing groove 17 and the reverse-insertion preventing rib 51 prevents the battery pack 10 (30) from being inserted in the reverse direction.

In Fig. 2, connecting grooves 16a, 16b are provided on one side of the lower case part 15 and similar connecting grooves 16c, 16d, which are not shown, are provided on other side of the lower care part 15. If the battery pack 10 (30) is attached to the attach-type video camera, the connecting grooves 16a,16b,16c,16. are connected with connecting projections provided in the battery fitting part of the video camera, and a locking projection of the battery fitting part of the video camera is connected with a locking concave part, which is not shown, on the bottom of the battery pack 10 (30). Thus, the fitting state is maintained.

On the front, in the insert direction, of the lower case part 15 of the battery pack 10 (30), the electrodes 11 (31), 12 (32) are provided at both ends and the terminal 13 (33) is provided at the center. Note that, the external structure of the case of the conventional battery pack 40 is the same except that the terminal 13 (33) is not provided.

In the embodiment shown in Fig. 1, to simplify the explanation, the dry battery cell pack 10 and the smart battery pack 30 have the same external structure. However, those battery pack 10(30) may be different in shape and size.

However, the structure and positional relationship of the electrodes 11 (31), 12 (32) and the terminal 13 (33) must be the same to ensure the interchangability of the battery pack 10 and the smart battery pack 30. More specifically, in the case where the size of the dry battery cell pack 10 and the smart battery pack 30 are changed, the size of the upper case part 14 should be changed to have the same structure as the lower care part 15 including the electrodes 11 (31), 12 (32) and the terminal 13 (33). However, in the case where two battery packs 10 (30) of different size are to be fitted to a video camera by inserting the battery pack 10 (30) into the case, it is needed to consider the structure of the battery fitting part.

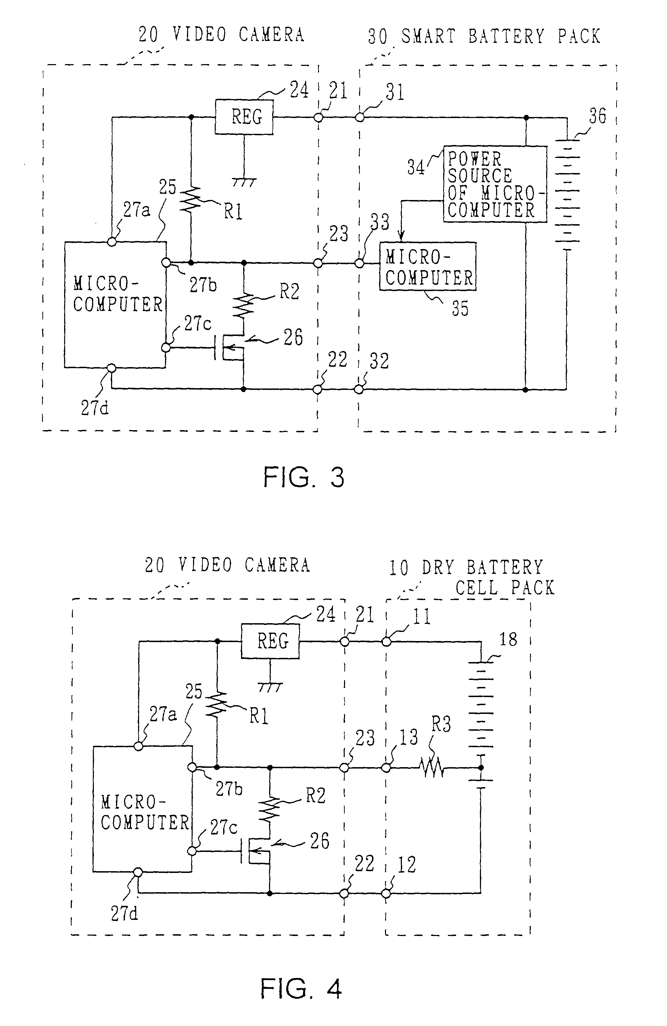

Fig. 3 shows the state where the smart battery pack 30 is fitted to the video camera 20. The smart battery pack 30 is composed of a plurality of chargeable battery cells 36 which are connected between the electrodes 31, 32, a microcomputer 35, and a power circuit 34 for the microcomputer 35. The power circuit 34 generates an operating voltage for the microcomputer 35 from the terminal voltage of the battery cells 36. The microcomputer 35 communicates with the video camera 20 via a terminal 33.

The video camera 20 includes a voltage regulator 24, a microcomputer 25 for controlling the video camera 20, a field effect transistor (FET) 26, a pull-up resistor R1 having extremely-high resistance, and a voltage-dividing resistor R2. The plus electrode 31 of the smart battery pack 30 is connected to the electrode 21 to maintain a constant voltage to the voltage regulator 24. The constant voltage is supplied to a terminal 27a of the microcomputer 25. On the other hand, the minus electrode 32 of the smart battery pack 30 is connected to a terminal 27d of the microcomputer 25 via the electrode 22. The microcomputer 25 receives an input from the terminal 23 at a detecting-voltage input terminal 27b. One end of the FET 26 is connected to the connection between the electrode 22 and the terminal 27d, and the other end is connected to the connection between the terminal 23 and the detecting-voltage input terminal 27b via the resistor R2. Furthermore, the gate terminal of the FET 26 is connected to a communication output terminal 27c of the microcomputer 25.

Fig. 4 shows the state where the dry battery cell pack 10 is fitted to the video camera 20. The dry battery cell pack 10 is composed of a plurality of dry battery cells 18 which are connected in series between the electrodes 11, 12, and a voltage-dividing resistor R3. One end of the voltage-dividing resistor R3 is connected to a plus pole of the first dry battery cell of those six dry battery cells 18, and the other end is connected to a battery discriminating terminal 13. An explanation of the structure of the video camera 20 is omitted because it is the same as that of Fig. 3. Here, it is assumed that the voltage-dividing resistor R2 included in the video camera 20 and the voltage-dividing resistor R3 included in the dry battery cell pack 10 are of the same resistance to simplify the description, but the present invention is not so limited.

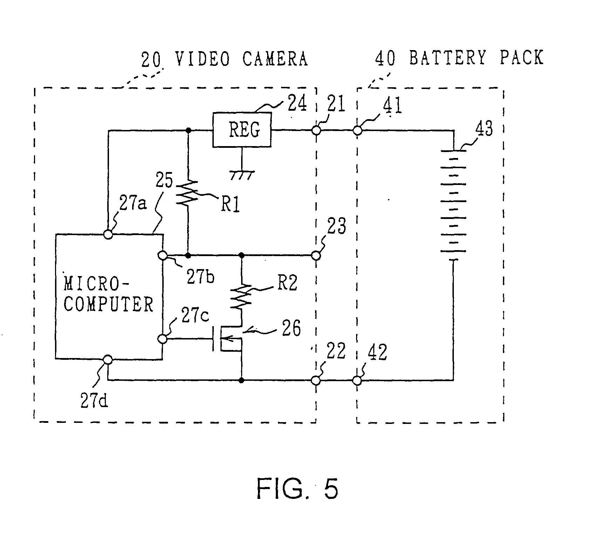

Fig. 5 shows the state where the battery pack 40 is fitted to the video camera 20. The battery pack 40 is composed of a plurality of battery cells 43 which are connected in series between electrodes 41, 42. Nothing is connected to the terminal 23 of the video camera 20 because the battery pack 40 has no terminal for communication and battery discrimination.

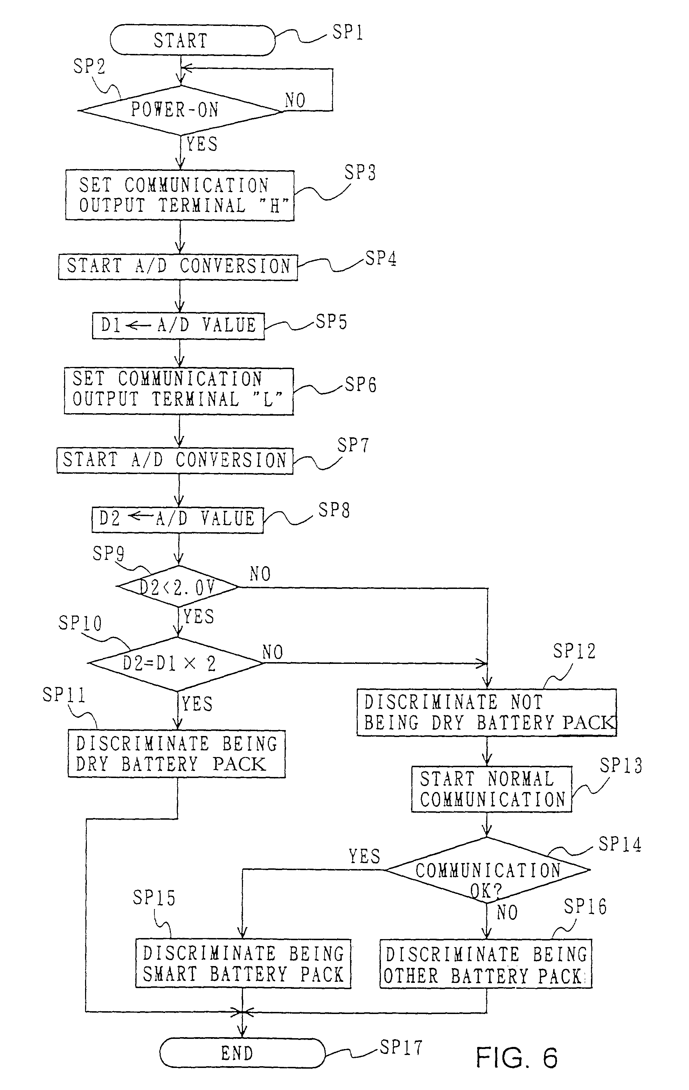

According to the above structure, a discriminating method between the dry battery cell pack 10, the smart battery pack 30, and the battery pack 40 will be described in relation to the flowchart shown in Fig. 6. The flowchart of Fig. 6 shows the operation of the microcomputer 25 which is included in the video camera 20. First, the process is started in step SP1 and whether the power is turned on or not is determined (step SP2). If power ON is determined, the communication output terminal 27c is turned to a logic "H" level (step SP3). If the communication output terminal 27c is turned to the logic "H" level, the FET 26 is turned into an ON state. Here, in the case where the smart battery pack 30 is fitted to the video camera 20 (Fig. 3), the voltage at the terminal 27b is almost 0 V. On the contrary, in the case where the dry battery cell pack 10 is fitted to the video camera 20 (Fig. 4), the voltage at the terminal 27b is almost half the value of the terminal voltage of a dry battery cell because the resistance values of the voltage-dividing resistors R2 and R3 are equal. Further, in the case where the battery pack 40 is fitted to the video camera (Fig. 5), the voltage at the terminal 27b is almost 0 V because the resistance of the pull-up resistor R1 is much larger than that of the voltage-dividing resistor R2.

The microcomputer 25 of the video camera 20 executes analog-to-digital (A/D) conversion to detect the voltage at the terminal 27b (step SP4). Then, the detected voltage is temporally stored as detection data D1 (step SP5).

Next, the microcomputer 25 outputs an output of a logic "L" level to the communication output terminal 27c (step SP6). If the communication output terminal 27c is set to the logic "L" level, the FET 26 is turned into an OFF state. In the case where the smart battery pack 30 is fitted to the video camera 20 (Fig. 3), the voltage of the terminal 27b is at the output voltage (about 3.2 V) of the voltage regulator 24 due to the pull-up resistor R1. On the contrary, in the case where the dry battery cell pack 10 is fitted to the video camera 20 (Fig. 4), the voltage at the terminal 27b is the terminal voltage of a dry battery cell because the resistance of the pull-up resistor R1 is very large. Furthermore, in the case where the battery pack 40 is fitted to the video camera 20 (Fig. 5), the voltage at the terminal 27b is at the output voltage (about 3.2 V) of the voltage regulator 24 due to the pull-up resistor R1.

The microcomputer 25 of the video camera 20 executes A/D conversion to detect the voltage at the terminal 27b (step SP7). Then, the detected voltage is temporally stored as detection data D2 (step SP8).

Next, the microcomputer 25 determines whether the stored detection data D2 is less than 2 V or not (step SP9). In the case where the dry battery cell pack 10 is fitted (Fig. 4), step SP10 is performed since the detection data D2 is the terminal voltage (about 1.5 V) of a dry battery cell. The microcomputer 25 discriminates whether the detection data D2 is double the detection data D1 or not (step SP10). If an affirmative result is obtained i.e. D2 = 2D1, it is determined that a dry battery cell pack 10 is fitted (step SP11). If no affirmative result is obtained, ie. D2<2×D1 it is determined that the battery pack is not a dry battery cell pack 10 (step SP12). On the other hand, in the case where the smart battery pack 30 or the battery pack 40 is fitted, in step SP9 (Figs. 3 and 5), the detection data D2 is at the output voltage (about 3.2 V) of the voltage regulator 24 as described above. As a result, it is determined that the battery pack is not a dry battery cell pack 10 (step SP12). If it is determined that the battery pack is not a dry battery cell pack 10 (step SP12), that is, in the case where the smart battery pack 30 is fitted, communication is started (step SP13), and it is checked whether normal communication can be performed or not (step SP14). If able to perform normal communication, it is determined that the battery pack is a smart battery pack 30 (step SP15) and then terminates the above process (step SP17). On the contrary, if normal communication cannot be performed, it is determined that the battery pack is a conventional battery pack 40 (step SP16).

From the above, it is so arranged as to perform discrimination between the dry battery cell pack 10 and the smart battery pack 30 by using the communication terminal 13 (33) for performing communication between the smart battery pack 30 and the electronic device so that a particular structure such as a push switch can be omitted. Thus, limitations on the electronic device design can be reduced.

Also, the embodiment can discriminate electrically between the dry battery cell pack 10 and the smart battery pack 30 without using a mechanical structure such as a push switch in a battery fitting part of the electronic device so that error-determination can be prevented.

Furthermore, the embodiment is able to structure the dry battery cell pack 10 with a simple structure which is of low impedance, in only adding a resistor R3, thereby realising a low cost dry battery cell pack 10.

Note that, in the present invention, the number of dry battery cells 14 which are contained in the dry battery cell pack 10 and the number of battery cells 36 which are contained in the smart battery pack 30 are not limited. Further, in the aforementioned embodiments, a video camera 20 is described as an example of the electronic device. However, the present invention is not so limited and can also be used in a portable telephone, a portable personal computer, or the like.

## Claims

1. A pack (10) for a plurality of non-rechargeable cells, the pack comprising:
a case (14, 15) for containing the plurality of cells (18);
a positive terminal (11) and a negative terminal (12) for connection to corresponding positive and negative terminals (21, 22) of equipment (20) to be energised by the pack, the case being configured such that, in use, cells are arranged in series between the positive (11) and negative (12) terminals;
a further terminal (13) for connection to a corresponding further terminal (23) of the said equipment (20); and
a resistance element (R3) connecting the further terminal (13) to a connection point electrically intermediate the positive and negative terminals (11, 12) to apply to the further terminal (13) an open circuit voltage less than the positive voltage applied by the series arranged cells to the positive terminal and greater than the negative voltage applied by the series arranged cells to the negative terminal.

2. A pack according to claim 1, further comprising a plurality of cells (18) arranged in series between the said positive (11) and negative (12) terminals.

3. A pack according to claim 2, wherein the said cells (18) are non-rechargeable.

4. A pack according to claim 1, 2 or 3, wherein the said connection point is spaced by at least one cell from the negative terminal (12).

5. A pack according to claim 1, 2, 3 or 4, wherein the said positive and negative terminals (11, 12) are at respective comers of the pack, and the said further terminal (13) is between the said positive and negative terminals (11, 12).

6. A pack according to claim 5, wherein the said positive, negative and further terminals (11, 12, 13) are on the same face of the case (14, 15).

7. A pack according to claim 1, 2, 3, 4, 5 or 6, comprising an orientation guide (17) for cooperating with a corresponding guide (51) of the said equipment for ensuring correct connection of the terminals (11, 12, 13) of the pack to the corresponding terminals (21, 22, 23) of the equipment.

8. A pack according to any one of claims 1 to 7, wherein the said positive, negative and further terminals (11, 12, 13) are the only terminals of the pack.

9. A pack according to any one of claims 1 to 8, wherein the said connection point is, or is arranged to be, directly connected to adjacent cells (18).

10. A combination of:
A) an electronic device energisable by:
a) one type of battery pack (10) having positive and negative terminals between which a plurality of cells are connected in series, and a further terminal, in which battery pack an open-circuit voltage intermediate the positive and negative voltages of the positive and negative terminals is present at the further terminal, and alternatively
b) another type of battery pack (30, 40) having at least positive and negative terminals between which a plurality of cells are connected in series, the electronic device comprising:
positive, negative and further terminals (23) corresponding to, and for connection to, those of the battery pack; and
means (R2, 26, 25) for detecting whether the open-circuit voltage is present at the further terminal of the device, and
responsive to the detection of whether or not the open-circuit voltage is present at the further terminal of the device for discriminating between the one and another types of battery pack; and
B) a battery pack according to claim 2 or any one of claims 3 to 8 when dependent on claim 2, the positive, negative and further terminals of the battery pack being connected to the corresponding terminals of the electronic device.

11. A combination according to claim 10, the device comprising means (R2, 26) for selectively connecting the further terminal (23) of the device to, and disconnecting the further terminal of the device from, a point of reference potential.

12. A combination according to claim 11, wherein the means (R2, 26) for selectively connecting and disconnecting includes a series arrangement of a predetermined resistance (R2) and a switching device (26).

13. A combination according to claim 12, comprising:
discriminating means (25) responsive to the detection (D2) of the voltage at the further terminal (23) of the device when the further terminal of the device is not connected to the part of reference potential and to the detection (D1) of the voltage at the further terminal (23) of the device when the further terminal of the device is connected to the point of reference potential, to discriminate between the said one and another battery types.

14. A combination according to claim 13, wherein the point of reference potential is the voltage of the said negative terminal (12), the resistances of the said predetermined resistance (R2) and the resistance element (R3) are approximately equal, and the discriminating means (25) determines that the pack is of the said one type if the voltage detected (D2) when the further terminal of the device is not connected to the negative terminal is approximately twice the voltage detected (D1) when the further terminal of the device is connected to the negative terminal.

15. A combination according to claim 11, 12, 13 or 141, wherein the predetermined voltage is less than two volts and the discriminating means determines (SP9) that the pack is of the said one type if the voltage detected at the further terminal when the further terminal of the device is not connected to the negative terminal is less than two volts.

16. A combination according to any one of claims 10 to 15, the device comprising means (25) for initiating (SP13, SP14) data communication with the battery pack via the further terminal if the battery pack is determined to be of said another type.

17. A combination according to claim 16 operable to discriminate between a version of said another type of battery having a further terminal which is a data communication terminal and another version which does not have a further terminal which is a data communication terminal.

18. A combination according to any one of claims 10 to 17 wherein the device is a video camera.

## Patentansprüche

1. Pack (10) für mehrere nicht wiederaufladbare Zellen, wobei das Pack aufweist:
ein Gehäuse (14, 15) zum Enthalten der mehreren Zellen (18),
einen positiven Anschluss (11) und einen negativen Anschluss (12) zum Anschließen an einen korrespondierenden positiven und negativen Anschluss (21, 22) einer vom Pack zu erregenden Einrichtung (20), wobei das Gehäuse so konfiguriert ist, dass die Zellen beim Gebrauch zwischen dem positiven (11) und negativen Anschluss (12) in Reihe angeordnet sind,
einen weiteren Anschluss (13) zum Anschließen an einen korrespondierenden weiteren Anschluss (23) der Einrichtung (20), und
ein den weiteren Anschluss (13) elektrisch mit einem Verbindungspunkt zwischen dem positiven und negativen Anschluss (11, 12) verbindendes Wiederstandselement (R3), um an den weiteren Anschluss (13) eine elektromotorische Kraft kleiner als die durch die in Reihe angeordneten Zellen an den positiven Anschluss angelegte positive Spannung und größer als die durch die in Reihe angeordneten Zellen an den negativen Anschluss angeordnete Spannung anzulegen.

2. Pack nach Anspruch 1, mit mehreren Zellen (18), die zwischen dem positiven (11) und negativen Anschluss (12) in Reihe angeordnet sind.

3. Pack nach Anspruch 2, wobei die Zellen nicht wiederaufladbar sind.

4. Pack nach Anspruch 1, 2 oder 3, wobei der Verbindungspunkt durch wenigstens eine Zelle vom negativen Anschluss (12) beabstandet ist.

5. Pack nach Anspruch 1, 2, 3 oder 4, wobei der positive und negative Anschluss (11, 12) an jeweiligen Ecken des Packs angeordnet sind, und wobei der weitere Anschluss (13) zwischen dem positiven und negativen Anschluss (11, 12) angeordnet ist.

6. Pack nach Anspruch 5, wobei der positive, negative und weitere Anschluss (11, 12, 13) auf der gleichen Seite des Gehäuses (14, 15) angeordnet sind.

7. Pack nach Anspruch 1, 2, 3, 4, 5 oder 6, mit einer Orientierungsführung (17) zur Zusammenwirkung mit einer korrespondierenden Führung (51) der Einrichtung, um eine korrekten Verbindung der Anschlüsse (11, 12, 13) des Packs mit den korrespondierenden Anschlüssen (21, 22, 23) der Einrichtung sicherzustellen.

8. Pack nach einem der Ansprüche 1 bis 7, wobei der positiven, negative und weitere Anschluss (11, 12, 13) die einzigen Anschlüsse des Packs sind.

9. Pack nach einem der Ansprüche 1 bis 8, wobei der Verbindungspunkt direkt mit den benachbarten Zellen (18) verbunden ist oder so angeordnet ist, dass er direkt mit den benachbarten Zellen (18) zu verbinden ist.

10. Kombination aus:
A) einer elektronischen Vorrichtung, die erregbar ist durch:
a) einen Typ eines Batteriepacks (10), das einen positiven und negativen Anschluss, zwischen denen mehrere Zellen in Reihe geschaltet sind, und einen weiteren Anschluss aufweist, bei welchem Batteriepack zwischen der positiven und negativen Spannung des positiven und negativen Anschlusses eine elektromotorische Kraft am weiteren Anschluss vorhanden ist, und alternativ
b) einen anderen Typ eines Batteriepacks (30, 40), das wenigstens einen positiven und negativen Anschluss aufweist, zwischen denen mehrere Zellen in Reihe geschaltet sind, wobei die elektronische Vorrichtung aufweist:
einen positiven, einen negativen und einen weiteren Anschluss (23), die mit denen des Batteriepacks korrespondieren und an diese anzuschließen sind, und
eine Einrichtung (R2, 26, 25) zum Detektieren, ob die elektromotorische Kraft am weiteren Anschluss der Einrichtung. vorhanden ist oder nicht, und
Entscheiden zwischen dem einen und anderen Typ Batteriepack in Abhängigkeit von der Detektion darüber, ob die elektromotorische Kraft am weiteren Anschluss der Vorrichtung vorhanden ist oder nicht,
und
B) einem Batteriepack gemäß Anspruch 2 oder einem der Ansprüche 3 bis 9, wenn abhängig vom Anspruch 2 der positive, negative und weitere Anschluss des Batteriepacks an die korrespondierenden Anschlüsse der elektronischen Einrichtung angeschlossen sind.

11. Kombination nach Anspruch 10, wobei die Vorrichtung eine Einrichtung (R2, 26) zum wahlweisen Anschließen des weiteren Anschlusses (23) der Vorrichtung an einen Referenzpotentialpunkt und Trennen des weiteren Anschlusses der Vorrichtung vom Referenzpotentialpunkt aufweist.

12. Kombination nach Anspruch 11, wobei die Einrichtung (R2, 25) zum wahlweisen Anschließen und Trennen eine Reihenanordnung aus einem vorbestimmten Widerstand (R2) und einer Schalteinrichtung (26) aufweist.

13. Kombination nach Anspruch 12, mit:
einer Unterscheidungseinrichtung (25), die, um zwischen dem einen oder anderen Batterietyp zu unterscheiden, auf die Detektion (D2) der Spannung am weiteren Anschluss (23) der Vorrichtung anspricht, wenn der weitere Anschluss der Vorrichtung nicht an den Referenzpotentialteil bzw. -punkt angeschlossen ist, und auf die Detektion (D1) der Spannung am weiteren Anschluss (23) der Vorrichtung anspricht, wenn der weitere Anschluss der Vorrichtung mit dem Referenzpotentialpunkt verbunden ist.

14. Kombination nach Anspruch 13, wobei der Referenzpotentialpunkt die Spannung des negativen Anschlusses (12) ist, die Widerstände des vorbestimmten Widerstandes (R2) und des Widerstandselements (R3) annähernd gleich sind und die Unterscheidungseinrichtung (25) bestimmt, dass das Pack von dem einen Typ ist, wenn die Spannung (D2), die detektiert wird, wenn der weitere Anschluss der Vorrichtung nicht an den negativen Anschluss angeschlossen ist, annähernd das Zweifache der Spannung (D1) ist, die detektiert wird, wenn der weitere Anschluss der Vorrichtung an den negativen Anschluss angeschlossen ist.

15. Kombination nach Anspruch 11, 12, 13 oder 14, wobei die vorbestimmte Spannung kleiner als zwei Volt ist und die Unterscheidungseinrichtung bestimmt (SP9), dass das Pack vom einen Typ ist, wenn bei nicht an den negativen Anschluss angeschlossenem weiteren Anschluss die am weiteren Anschluss detektierte Spannung kleiner als zwei Volt ist.

16. Kombination nach einem der Ansprüche 10 bis 15, wobei die Vorrichtung eine Einrichtung (25) zum Beginnen (SP13, SP14) einer Datenkommunikation mit dem Batteriepack über den weiteren Anschluss, wenn das Batteriepack als vom anderen Typ bestimmt ist, aufweist.

17. Kombination nach Anspruch 16, betreibbar zum Unterscheiden zwischen einer Version des anderen Batterietyps, der einen weiteren Anschluss aufweist, der ein Datenkommunikationsanschluss ist, und einer anderen Version, die keinen weiteren Anschluss aufweist, der ein Datenkommunikationsanschluss ist.

18. Kombination nach einem der Ansprüche 10 bis 17, wobei die Vorrichtung eine Videokamera ist.

## Revendications

1. Coffret (10) pour une pluralité de cellules non rechargeables, le coffret comprenant :
un boîtier (14,15) servant à contenir la pluralité de cellules (18);
une borne positive (11) et une borne négative (12) pour la connexion à des bornes positive et négative correspondantes (21,22) d'un équipement (20) devant être alimenté par le coffret, le boîtier étant configuré de telle sorte qu'en cours d'utilisation, des cellules sont disposées en série entre la borne positive (11) et la borne négative (12);
une autre borne (13) destinée à être connectée à une autre borne correspondante (12) dudit équipement (20); et
un élément formant résistance (R3) connectant l'autre borne (13) à un point de connexion situé électriquement entre les bornes positive et négative (11,12) pour appliquer à l'autre borne (13) une tension en circuit ouvert inférieure à la tension positive appliquée par les cellules disposées en série à la borne positive et supérieure à la tension négative appliquée par ldes cellules disposées en série à la borne négative.

2. Coffret selon l'une des revendications 1, comprenant en outre une pluralité d'éléments de cellules (18) disposés en série entre ladite borne positive (11) et ladite borne négative (12).

3. Coffret selon la revendication 2, dans lequel lesdites cellules (18) sont non rechargeables.

4. Coffret selon la revendication 1, 2 ou 3, dans lequel ledit point de connexion est séparé, par au moins une cellule, de la borne négative (12).

5. Coffret selon la revendication 1, 2, 3 ou 4, dans lequel lesdites bornes positive et négative (11,12) sont situées au niveau de coins respectifs du coffret, et que ladite autre borne (13) est disposée entre lesdites bornes positive et négative (11,12).

6. Coffret selon la revendication 5, dans lequel lesdites bornes positive et négative et l'autre borne (11,12,13) sont situées sur la même face du coffret (14,15).

7. Coffret selon la revendication 1, 2, 3, 4, 5 ou 6, comprenant un guide d'orientation (17) destiné à coopérer avec un guide correspondant (52) dudit équipement pour garantir une connexion correcte des bornes (11,12,13) du coffret aux bornes correspondantes (21,22,23) de l'équipement.

8. Coffret selon l'une quelconque des revendications 1 à 7, dans lequel lesdites bornes positive, négative et ladite autre borne (11,12,13) sont les seules bornes du coffret.

9. Coffret selon l'une quelconque des revendications 1 à 8, dans lequel ledit point de connexion est disposé de manière à être connecté directement à des cellules adjacentes (18).

10. Combinaison comprenant :
A) un dispositif électronique pouvant être alimenté par :
a) un type de coffret de batterie (10) possédant des bornes positive et négative, entre lesquelles une pluralité de cellules sont disposées en série, et une autre borne, coffret de batterie dans lequel une tension en circuit ouvert se situant entre les tensions positive et négative des bornes positive et négative est présente sur l'autre borne, et sinon
b) un autre type de coffret de batterie (30,40) possédant au moins des bornes positive et négative, entre lesquelles une pluralité de cellules sont connectées en série, le dispositif électronique comprenant :
des bornes positive et négative et une autre borne (23), qui correspondent et sont destinées à être connectées à celles du coffret de batterie; et
des moyens (R2,25,26) pour détecter si la tension en circuit ouvert est présente sur l'autre borne du dispositif, et
en réponse à la détection du fait que la tension en circuit ouvert est présente ou non sur l'autre borne du dispositifs pour établir une discrimination entre l'un et l'autre des types de coffrets de batterie; et
B) un coffret de batterie selon la revendication 2 ou l'une quelconque des revendications 3 à 8 considérées comme dépendantes de la revendication 2, la borne positive, la borne négative et l'autre borne du coffret de batterie étant connectées aux bornes correspondantes du dispositif électronique.

11. Combinaison selon la revendication 10, dans laquelle le dispositif comprend des moyens (R2,26) pour connecter sélectivement l'autre borne (23) du dispositif à un point de potentiel de référence et déconnecter l'autre borne du dispositif à partir du point de potentiel de référence.

12. Combinaison selon la revendication 11, dans laquelle les moyens (R2,26) de connexion et de déconnexion sélectives incluent un agencement série formé d'une résistance prédéterminée (R2) dans le dispositif de commutation (26).

13. Combinaison selon la revendication 12, comprenant :
des moyens de discrimination (25) aptes à répondre à la détection (D2) de la tension sur l'autre borne (23) du dispositif lorsque l'autre borne du dispositif n'est pas connectée à la partie du potentiel de référence, et à la détection (D) de la tension sur l'autre borne (23) du dispositif lorsque l'autre borne du dispositif est connectée au point de potentiel de référence, pour établir une discrimination entre ledit un type de batterie et ledit autre type de batterie.

14. Combinaison selon la revendication 13, dans laquelle le point de potentiel de référence est la tension de ladite borne négative (12), les valeurs résistives de ladite résistance prédéterminée (R2) et de l'élément de résistance (R3) sont approximativement égales, et les moyens de discrimination (25) établissent que le coffret est dudit un type si la tension détectée (D2) lorsque l'autre borne du dispositif n'est pas connectée à la borne négative, est égale approximativement au double de la tension détectée (D1) lorsque l'autre borne du dispositif est connectée à la borne négative.

15. Combinaison selon la revendication 11, 12, 13 ou 14, dans laquelle la tension prédéterminée est inférieure à deux volts et les moyens de discrimination déterminent (SP9) que le bloc est dudit un type si la tension détectée sur l'autre borne lorsque l'autre borne du dispositif n'est pas connectée à la borne négative, est inférieure à deux volts.

16. Combinaison selon l'une quelconque des revendications 10 à 15, le dispositif comprenant des moyens (25) pour déclencher (SP13,SP14) une communication de données avec le coffret de batterie par l'intermédiaire de l'autre borne si le coffret de batterie est déterminé comme étant dudit autre type.

17. Combinaison selon la revendication 16, apte à fonctionner pour établir une discrimination entre une version dudit autre type de batterie ayant une autre borne, qui est une borne de communication de données, et une autre version, qui ne comporte aucune autre borne qui soit une borne de communication de données.

18. Combinaison selon l'une quelconque des revendications 10 à 17, dans laquelle le dispositif est une caméra vidéo.
